# EUROPÄISCHE PATENTSCHRIFT

(11) **EP 2 366 083 B1**
(45) Veröffentlichungstag und Bekanntmachung des Hinweises auf die Patenterteilung: **05.03.2014**
(21) Anmeldenummer: 09748224.4
(22) Anmeldetag: 08.10.2009
(51) Int. Cl.: F24J 2/20, F24J 2/24, F24J 2/36, F24J 2/50, F24J 2/51

(54) **VORRICHTUNG ZUM ABSORBIEREN VON ELEKTROMAGNETISCHER STRAHLUNG**
DEVICE FOR ABSORBING ELECTROMAGNETIC RADIATION
DISPOSITIF POUR ABSORBER UN RAYONNEMENT ÉLECTROMAGNÉTIQUE

(30) Priorität: 09.10.2008 DE 102008050618
(43) Veröffentlichungstag der Anmeldung: 21.09.2011
(73) Patentinhaber: Kuffer, Roland, 85049 Ingolstadt (DE)
(72) Erfinder: Kuffer, Roland, 85049 Ingolstadt (DE)
(74) Vertreter: Witzany, Manfred
(86) Internationale Anmeldenummer: PCT/EP2009/007226
(87) Internationale Veröffentlichungsnummer: WO 2010/040525

(56) Entgegenhaltungen:
- WO-A1-00/70274
- DE-A1- 3 224 688
- DE-U1- 8 810 095
- GB-A- 2 057 673
- US-A- 3 859 980

## Beschreibung

Die Erfindung betrifft eine Vorrichtung zum Absorbieren von elektromagnetischer Strahlung, insbesondere Sonnenstrahlung gemäß dem Oberbegriff des Patentanspruchs 1.

Aus der DE 32 24 688 A1 ist ein gattungsgemäßer Sonnenkollektor bekannt, der von zusammengeschweißten Kunststoffolien gebildet ist. Diese Kunststoffolien sind durch Schweißnähte in Kammern geteilt. Diese Kammern können dabei mit einem Wärmetransportmedium in Form von Wasser durchströmt werden. Zu diesem Zweck sind die Kammern mit einem gemeinsamen Zulauf und einem gemeinsamen Ablauf kommunizierend verbunden.

Diese bekannte Vorrichtung hat sich zur Bildung von Sonnenkollektoren auf Flachdächern gut bewährt und zeichnet sich insbesondere durch einen kostengünstigen Aufbau aus. Eine Anwendung eines derartigen Sonnnenkollektors auf Schrägdächern ist jedoch ausgeschlossen, da sich in diesem Fall eine Schichtung des Wärmetransportmediums einstellt. Insbesondere im Bereich der unteren Kammern stellen sich dabei Drücke ein, die mit dieser Folientechnik nicht mehr beherrschbar sind. Damit besitzt dieser bekannte Sonnenkollektor nur ein mäßiges Anwendungsspektrum. Außerdem stellt sich das grundsätzliche Problem, daß dieser bekannte Sonnenkollektor üblicherweise in einem geschlossenen Kreislauf betrieben wird, so daß sich im Betrieb auch bei flachliegenden Kollektoren ungünstige Druckbedingungen einstellen können.

Aus der DE 42 37 228 C2 ist ein Absorber für Solarkollektoren bekannt, der sich durch eine besonders hohe Energieeffizienz auszeichnet. Zu diesem Zweck ist der eigentliche Absorber unter- und randseitig von einem Wärmedämmstoff umgeben. An der der Sonne zugewandten Oberseite befindet sich eine Vakuumisolation, die von einem Fenster abgeschlossen ist. Auf diese Weise ergibt sich rund um den Absorber eine gute Wärmeisolation, so daß dieser Absorber auch bei kalter Umgebungsluft wie beispielsweise im Winter hohe Temperaturen im Wärmetransportmedium erzeugen kann. Eine Ausbildung dieses bekannten Solarkollektors in Form von Folien entsprechend der vorgenannten Druckschrift verbietet sich jedoch, da eine Vakuumisolation mit Folien wegen der fehlenden Formsteifigkeit nicht realisierbar ist.

Aus der DE 27 20 755 A1 ist ein weiterer Solarkollektor bekannt, der eine strahlungsabsorbierende Flüssigkeit als Wärmetransportmedium aufweist. Diese Maßnahme soll insbesondere Überhitzungsproblemen beim Betrieb dieses Solarkollektors vorbeugen.

Aus der DE 88 10 095 U1 ist eine autonome Solarvorrichtung zur Warmwasserbereitung bekannt. Die Vorrichtung besteht aus einem dünnwandigen Folienkollektor, der mit einer Brauchwasserleitung verbunden ist. Da der Kollektor den Druck in der Gebrauchwasserleitung nicht überstehen kann, ist zwischen der Brauchwasserleitung und dem Kollektor ein Druckminderer vorgesehen. Dieser Druckminderer dient jedoch ausschließlich zur Absenkung des Wasserleitungsdruckes und kann somit Druckdifferenzen innerhalb des Kollektorsystems nicht begrenzen.

Aus der US 3 859 980 A ist eine weitere Vorrichtung zum Absorbieren von Sonnenstrahlung bekannt. Diese Vorrichtung weist mehrere biegsame Folientaschen auf, die in Kammern geteilt ist. Durch eine Zuleitung wird ein Wärmetransportmedium in diese Kammern eingeführt und nach Erwärmung durch die Sonnenstrahlung durch eine Ableitung entnommen. Es ist außerdem eine Druck-Regeleinrichtung erwähnt, ohne deren Position und Funktion zu offenbaren. Der Erfindung liegt die Aufgabe zugrunde, eine Vorrichtung der eingangs genannten Art zu schaffen, die bei kostengünstigem Aufbau eine universelle Anwendbarkeit bietet.

Diese Aufgabe wird erfindungsgemäß mit den Merkmalen des Patentanspruchs 1 gelöst.

Die Vorrichtung gemäß Anspruch 1 dient zum Absorbieren elektromagnetischer Strahlung, insbesondere Sonnenstrahlen. Der Haupteinsatzzweck dieser Vorrichtung liegt im Bereich von Sonnenkollektoren zur Umwandlung von Sonnenlicht in Wärme. Um die Vorrichtung kostengünstig zu gestalten, weist sie mindestens eine biegsame Folientasche auf, die in Kammern geteilt ist. Diese Folientasche wird dabei von einem Wärmetransportmedium durchströmt. Der Aufbau in Form von Folien bietet den Vorteil, daß die Vorrichtung sehr leicht transportiert werden kann. Insbesondere kann diese Vorrichtung zusammengerollt bzw. -gefaltet werden. Folien sind sehr kostengünstig herzustellen, da sie nur wenig Material verbrauchen. Vorzugsweise bestehen die Folien aus einem Polymermaterial, wobei neben reinen Polymeren auch Mischpolymerisate einsetzbar sind. Insbesondere haben sich Polyvenylchlorid, Polyethylen und Polyurethan bewährt. Zur Bildung der Folientaschen kann eine Folie umgeschlagen werden. Alternativ können auch zwei Folien zusammengeschweißt werden. Durch die Aufteilung der Folientasche in Kammern wird eine gleichmäßige Durchströmung der Folientasche durch das Wärmetransportmedium und eine erhöhte Stabilität der Folientasche erreicht. Dies ist wichtig, um das Sonnenlicht optimal auszunutzen. Die Aufteilung kann durch Schweißnähte und/oder durch beabstandete Schweißpunkte erfolgen. Als Wärmetransportmedium wird vorzugsweise ein Silikonöl eingesetzt, welches unter Betriebsbedingungen weit unter seinem Siedepunkt bleibt. Auf diese Weise werden Druckerhöhungen durch Siedeeffekte im Wärmetransportmedium zuverlässig vermieden. Zum Zu- und Abführen des Wärmetransportmediums weist die Folientasche mindestens einen Zulauf und mindestens einen Ablauf auf. Diese kommunizieren dabei mit den Kammern der Folientasche.

Legt man die beschriebenen Folientaschen auf ein Schrägdach, so ergibt sich das grundsätzliche Problem, daß sich innerhalb der Folientasche unterschiedliche Druckverhältnisse einstellen. Insbesondere stellt sich schwerkraftbedingt im Bereich des unteren Dachendes ein wesentlich größerer Druck als im Firstbereich ein, was im unteren Bereich zu einer erheblichen Druckbelastung und Beanspruchung der Folientasche führt. Grundsätzlich könnte diesem Umstand begegnet werden, indem die Folientasche entsprechend dickwandig ausgebildet wird. Diese Maßnahme läuft jedoch der Aufgabenstellung zuwider. Außerdem wird die Folientasche auf diese Weise biegesteifer, was deren Handhabung erheblich erschwert.

Zur Lösung dieses Problems wird erfindungsgemäß zwischen mindestens zwei der Kammern bzw. Folientaschen zulaufseitig mindestens ein Druckminderer vorgesehen, der den Druck des Wärmetransportmediums in der Kammer begrenzt. Diese Maßnahme scheint der Aufgabenstellung zuwider zu laufen, da die Druckminderer einen doch beträchtlichen Kostenfaktor darstellen. Beispielsweise bei einer Dachhöhe von 3 m und einem maximalen Druck des Wärmetransportmediums von 2 kPa ergäbe sich eine Anordnung von wenigstens 14 Druckminderern, die bei der Gesamtinstallation des Solarkollektors kostenmäßig zu Buche schlagen. Dabei ist allerdings zu berücksichtigen, daß die Druckminderer nur einmal für jeden Höhenabschnitt des Solarkollektors erforderlich sind, da sich in einer sich horizontal über die gesamte Dachlänge erstreckenden Kammer keine schwerkraftbedingten Druckdifferenzen aufbauen können. Außerdem können die Druckminderer sehr einfach aufgebaut werden, da im wesentlichen ein druckloser Transport des Wärmetransportmediums durch die Vorrichtung angestrebt wird.

Um zu verhindern, daß sich zwischen den Kammern infolge der kommunizierenden ablaufseitigen Verbindung Drücke aufbauen, ist es gemäß Anspruch 2 vorteilhaft, wenn zwischen mindestens zwei Kammern bzw. Folientaschen ablaufseitig mindestens eine Fluiddiode bzw. mindestens ein Druckminderer vorgesehen ist. Eine Fluiddiode besitzt einen geringen Strömungswiderstand in der Vorzugsrichtung aber großen Ströumungswiderstand in der Gegenrichtung. Auf diese Weise wird verhindert, daß der Ablauf einer höherliegenden Kammer das Wärmetransportmedium ablaufseitig in die darunterliegende Kammer drücken kann. Um zu verhindern, daß sich entsprechende Drücke bei Stillstand des Wärmetransportmediums aufbauen können, genügt es in diesem Fall, ein hinreichend großes Vorratsgefäß zur Verfügung zu stellen, so daß das Wärmetransportmedium stets ungehindert abfließen kann. Damit tritt der Fall des stillstehenden Wärmetransportmediums nur dann ein, wenn die Kammern praktisch leer sind. Diese Maßnahme schützt gleichzeitig die Vorrichtung vor Überhitzung bei stillstehendem Wärmetransportmedium. Alternativ kann auch ein Druckminderer ablaufseitig vorgesehen werden, durch den das Entstehen überhöhter Drücke zuverlässig ausgeschlossen wird. Diese funktionieren auch bei stillstehendem Wärmetransportmedium.

Eine einfache Realisierung des Druckminderers in Form eines Leitungsstücks mit darin eingeführtem Schaum bzw. Fasermaterial ergibt sich aus Anspruch 3. Dieses Material sorgt für einen entsprechenden Strömungswiderstand, so daß sich keine Drücke akkumulieren können. Vorzugsweise sind der Schaum bzw. das Fasermaterial derart dimensioniert, daß sie eine kapillare Wirkung besitzen.

Alternativ oder zusätzlich kann der Druckminderer von einer Tropfkammer gebildet sein. Diese Tropfkammer unterbricht die kommunizierende Verbindung zwischen den einzelnen Kammern, so daß sich keine Drücke von einer Kammer zur nächsten akkumulieren können.

Alternativ oder zusätzlich kann der Druckminderer gemäß Anspruch 5 auch von einem Leitungsstück mit quer zur Fließrichtung verlaufenden Schwellen gebildet sein. Diese Schwellen erzeugen eine Kaskade, die ebenfalls druckabbauend wirkt.

Gemäß Anspruch 6 ist es vorteilhaft, wenn der Druckminderer von mindestens einem Mäander gebildet ist, der durch die vergrößerte Leitungslänge ebenfalls druckabbauend wirkt.

Zur Erzielung einer hohen Endtemperatur des Wärmetransportmediums ist es wichtig, Wärmeverluste möglichst klein zu halten. Der Hauptwärmeverlust eines Solarkollektors wird von der Wärmeleitung in die Umgebungsluft gebildet. Diese Wärmeleitung wird um so stärker sein, je kühler die Umgebungsluft ist. Insbesondere bei kalter Umgebungsluft wird jedoch die größte Heizleistung benötigt. Daher ist es zweckmäßig, diesen Verlustmechanismus klein zu halten. Gemäß Anspruch 7 wird zu diesem Zweck vorgeschlagen, zumindest die Folienunterseite mit mindestens einem Wärmeisolator zu belegen. Die Folienunterseite hat keine strahlungseinkoppelnde Aufgabe und kann daher in beliebiger Weise wärmeisoliert werden. Die Folienunterseite besitzt jedoch eine im Verhältnis zu den Stirnseiten große Fläche und trägt daher erheblich zum Wärmeverlust bei. Aus diesem Grund ist eine Isolation der Folienunterseite besonders wirkungsvoll. Daneben ist es zweckmäßig, zusätzlich auch die Stirnseiten der Folientasche zu isolieren.

Zur weiteren Erhöhung der Endtemperatur des Wärmetransportmediums ist es gemäß Anspruch 8 vorteilhaft, wenn die Folientaschen zumindest oberseitig mit einer Wärmeisolation belegt sind. Die Isolation der Oberseite ist deshalb besonders zweckmäßig, da diese unmittelbar der Umgebungsluft ausgesetzt ist. Zusätzlich können an der Oberseite der Folientasche auch Winde entlang streichen, die zu einem verstärkten Wärmeverlust führen können. Um andererseits die Strahlungsabsorption nicht zu sehr zu beeinträchtigen, ist es bei der oberseitigen Isolation jedoch wichtig, diese aus einem transparenten Wärmeisolator zu bilden.

Häufig eingesetzte Wärmeisolationsmaterialien sind nässeempfindlich und verlieren im nassen Zustand einen erheblichen Teil ihrer Isolationswirkung. Aus diesem Grund ist es gemäß Anspruch 9 günstig, wenn der Wärmeisolator von einer Schutzfolie umgeben ist. Diese Schutzfolie hat im wesentlichen die Aufgabe, Nässe, insbesondere Regen von der Wärmeisolation fern zu halten.

Zur weiteren Verbesserung der Isolationswirkung ist es gemäß Anspruch 10 günstig, wenn die Schutzfolie gasgefüllt ist. Damit hebt sich die Schutzfolie leicht von der Wärmeisolation ab, so daß die Schutzfolie wie ein Treibhaus wirkt. Zusätzlich ergibt sich auf diese Weise ein günstiger Hagelschutz.

Zur einfachen Realisierung der Kammern sowie des Zu- bzw. Ablaufs ist es gemäß Anspruch 11 vorteilhaft, die Folientasche mittels Schweißnähten zu strukturieren. Insbesondere können diese Schweißnähte an einer laufenden Folienbahn hergestellt werden, was die Herstellung besonders kostengünstig macht.

Grundsätzlich ist daran gedacht, die der Strahlungsquelle zugewandte Seite der Folientaschen transparent und die abgewandte Seite schwarz zu färben. Auf diese Weise wird erreicht, daß die elektromagnetische Strahlung die zugewandte Folie durchdringt und von der abgewandten Folie absorbiert wird. Die auf diese Weise in der Folie entstehende Wärme wird dann auf das Wärmetransportmedium übertragen. Gemäß Anspruch 12 ist es jedoch günstiger, das Wärmetransportmedium selbst strahlungsabsorbierend auszubilden. Damit kommt neben der oben beschriebenen Konfiguration der Folientaschen auch eine Alternative in Frage, bei der beispielsweise beide Seiten der Folientasche transparent ausgebildet sind. Durch den Einsatz eines strahlungsabsorbierenden Wärmetransportmediums wird die Wärme unmittelbar im Wärmetransportmedium erzeugt, so daß eine Wärmeleitung zwischen der Absorberfläche und dem Wärmetransportmediume nicht mehr erforderlich ist. In diesem Fall kann die Absorption der Vorrichtung auch gesteuert werden. Fällt beispielsweise eine Umwälzpumpe für das Wärmetransportmedium aus, so besteht grundsätzlich die Gefahr einer Überhitzung des Wärmetransportmediums, was zu einer Schädigung der Folie führen könnte. Sieht man vor, daß das Wärmetransportmedium in diesem Fall ungehindert aus der Folientasche abfließen kann, so reguliert sich das System insofern von selbst, als sich bei Ausfall der Umwälzpumpe auch die Absorptivität der Vorrichtung verringert. Die Vorrichtung schützt sich in diesem Fall selbst gegen Überhitzung.

Um die Reaktionszeit eines Überhitzungsschutzes zu verkürzen, ist es gemäß Anspruch 13 günstig, ein Wärmetransportmedium mit temperaturabhängiger Strahlungsabsorption einzusetzen. Dabei nimmt die Absorption des Wärmetransportmediums mit zunehmender Temperatur ggf. schlagartig ab. Im Falle einer drohenden Überhitzung des Wärmetransportmediums, beispielsweise bei Stillstand der Umwälzpumpe, verringert sich auf diese Weise die Strahlungsabsorption, da das Wärmetransportmedium zunehmend transparenter wird. Damit verringert sich aber auch der Energieeintrag in das Wärmetransportmedium, was einer Überhitzung vorbeugt.

Gemäß Anspruch 14 ist es günstig, die Folientasche bzw. die Schutzfolie UV-resistent bzw. verbißsicher auszurüsten. Hierbei kommen übliche UV-Stabilisatoren zum Einsatz. Zusätzlich ist daran gedacht, Duftstoffe in das Polymer einzubauen, welche Tiere abschrecken, die in die Folie beißen könnten. Beispiele für derartige Tiere sind insbesondere Marder und Waschbären.

Zur Verbesserung der Energieausbeute ist es gemäß Anspruch 15 vorteilhaft, wenn die Folientasche bzw. die Schutzfolie mindestens eine Fotovoltaikzelle aus halbleitendem Material aufweist. Damit kann ein Teil des Sonnenlichts direkt in elektrische Energie umgewandelt werden, während der hierfür nicht nutzbare Anteil der Solarenergie in Wärme umgesetzt wird. Dieser Anteil dient dann zur Erwärmung des Wärmetransportmediums, um auf diese Weise weiter genutzt werden zu können. Auf diese Weise ergibt sich ein günstiger Synergieeffekt, da das Wärmetransportmedium die Fotovoltaikzellen kühlt und damit auch deren Wirkungsgrad erhöht.

Gemäß Anspruch 16 ist es vorteilhaft, wenn in der Zu- bzw. Ableitung mindestens ein den Durchfluß des Wärmetransportmediums beeinflussendes Ventil bzw. mindestens eine Umwälzpumpe vorgesehen ist. Damit kann in einfacher Weise die Durchflußgeschwindigkeit des Wärmetransportmediums eingestellt bzw. geregelt werden, um eine Anpassung an Umgebungsbedingungen zu realisieren. Insbesondere ist daran gedacht, bei starker Sonneneinstrahlung die Durchflußgeschwindigkeit des Wärmetransportmediums zu erhöhen, um auf diese Weise mehr Wärme zu gewinnen. Bei verringerter Sonneneinstrahlung wird dagegen die Durchflußgeschwindigkeit des Wärmetransportmediums reduziert, um ein ausreichend hohes Temperaturniveau sicherzustellen. Vorzugsweise steht dieses Ventil bzw. diese Umwälzpumpe mit mindestens einem Sensor in Wirkverbindung, so daß auf diese Weise eine Regelung erzielt wird. Im einfachsten Fall wird die Temperatur des Wärmetransportmediums in der Ablaufleitung auf einen Wert geregelt, der die Nutzung der Wärme für den geplanten Einsatzzweck noch ermöglicht. Alternativ sind jedoch auch komplexere Regelungen denkbar, die beispielsweise den Energieumsatz des Gesamtsystems optimieren. Außerdem ist daran gedacht, mit dem mindestens einen Sensor eine Schneebedeckung des Kollektors zu erfassen, um den Wärmefluß des Wärmetransportmediums umzukehren. Auf diese Weise kann das Wärmetransportmedium bei Schneebedeckung des Kollektors Wärme in den Kollektor einbringen, um den auf dem Kollektor befindlichen Schnee anzuschmelzen, so daß dieser anschließend abrutschen kann.

Schließlich ist es gemäß Anspruch 17 günstig, wenn die Vorrichtung auf einem Untergrund festgeklebt ist. Dies hat den Vorteil, daß eine Bewegung der Vorrichtung relativ zum Untergrund ausgeschlossen ist, die durch Scheuereffekte zu einem Abrieb und damit zu einer Zerstörung der Vorrichtung führen könnten. Außerdem kann die Vorrichtung in diesem Fall unabhängig von der konkreten Dachform in stets gleicher Weise montiert werden. Insbesondere müssen keinerlei Befestigungsmittel an die konkrete Dachform angepaßt werden.

Der Erfindungsgegenstand wird beispielhaft anhand der Zeichnung erläutert, ohne den Schutzumfang zu beschränken.

Weitere Vorteile und Merkmale der vorliegenden Erfindung werden in der folgenden detaillierten Beschreibung anhand der dazugehörigen Figuren dargelegt, in denen mehrere Ausführungsbeispiele der vorliegenden Erfindung enthalten sind. Es sollte jedoch verstanden werden, daß die Zeichnung nur dem Zweck der Darstellung der Erfindung dient und nicht den Schutzbereich der Erfindung beschränkt.

Es zeigt:
- Figur 1: eine schematische Darstellung eines Hauses mit einer Solarkollektoranlage,
- Figur 2: eine räumliche Ansicht einer Vorrichtung zum Absorbieren von elektromagnetischer Strahlung,
- Figur 3: eine Schnittdarstellung durch die Vorrichtung gemäß Figur 2 entlang der Schnittlinie III-III,
- Figur 4: eine schematische Darstellung einer ersten Ausführungsform eines Druckminderers,
- Figur 5: eine schematische Darstellung einer zweiten Ausführungsform eines Druckminderers und
- Figur 6: eine schematische Darstellung einer dritten Ausführungsform eines Druckminderers.

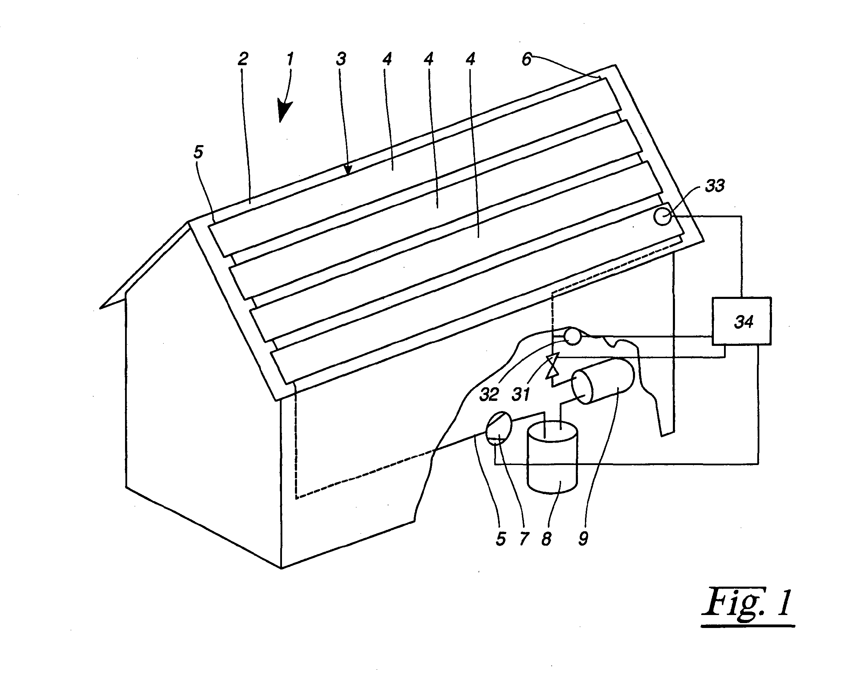

Die Figur 1 zeigt eine schematische Darstellung eines Hauses 1 mit einem Dach 2. Auf dem Dach 2 ist eine Vorrichtung 3 zum Absorbieren von Sonnenstrahlung angebracht, die von mehreren Folientaschen 4 gebildet ist. Diese Folientaschen 4 stehen über Zuleitungen 5 und Ableitungen 6 in Verbindung. Die Zuleitung 5 steht dabei mit einer Druckseite einer Umwälzpumpe 7 in Verbindung, welche einen Wärmeträger aus einem Vorratsgefäß 8 in die Zuleitung 5 pumpt. Die Ableitung 6 steht dagegen mit einem Wärmetauscher 9 in Verbindung, der dem Wärmetransportmedium die aufgenommene Wärme entnimmt, um sie im Haus 1 nutzbar zu machen. Vom Wärmetauscher 9 gelangt das Wärmetransportmedium zurück in den Vorratsbehälter 8.

In der Ableitung 6 ist ein Ventil 31 eingebracht, welches den Durchfluß des Wärmetransportmediums durch die Ableitung 6 beeinflußt. Dieses Ventil 31 steht mit einem Regler 34 in Wirkverbindung, der von Sensoren 32, 33 beeinflußt ist. Der Sensor 32 ist dabei ein reiner Temperatursensor, der die Temperatur des Wärmetransportmediums in der Ableitung 6 erfaßt. Der Sensor 33 ist dagegen ein Schneesensor, der beispielsweise als lichtempfindlicher Sensor ausgebildet sein kann und bestimmt, ob die Folientaschen 4 schneebedeckt sind. Zusätzlich beeinflußt der Regler 34 die Umwälzpumpe 7 im Sinne einer Drehrichtungsumkehr.

Der Regler 34 kann im einfachsten Fall eine Temperaturregelung des Wärmetransportmediums in der Ableitung 6 realisieren. Dabei wird der Fluß des Wärmetransportmediums derart geregelt, daß sich eine konstante Temperatur des Wärmetransportmediums am Ort des Temperatursensors 32 einstellt. Außerdem wird der Regler 34 vom Schneesensor 33 beeinflußt, der im einfachsten Fall eine Drehrichtungsumkehr der Umwälzpumpe 7 realisiert. Bei einer Schneebedeckung der Folientaschen 4 wird in diesem Fall das Wärmetransportmedium in seiner Flußrichtung umgekehrt, so daß es im Wärmetauscher 9 nicht Wärme abgibt, sondern in diesem erwärmt wird. Diese Wärme wird dann in die Folientaschen 4 eingebracht, um den auf diesen liegenden Schnee abzuschmelzen und damit die Funktion der Vorrichtung 3 wieder herzustellen. Vorzugsweise ist der Schneesensor 33 derart aufgebaut, daß er neben der Schneedicke auch den.Schneefall erfaßt, um zu verhindern, daß bei Dauerschneefall die Folientaschen 4 permanent abgetaut werden. Dies sorgt für eine erhöhte Energieeffizienz der Vorrichtung 3.

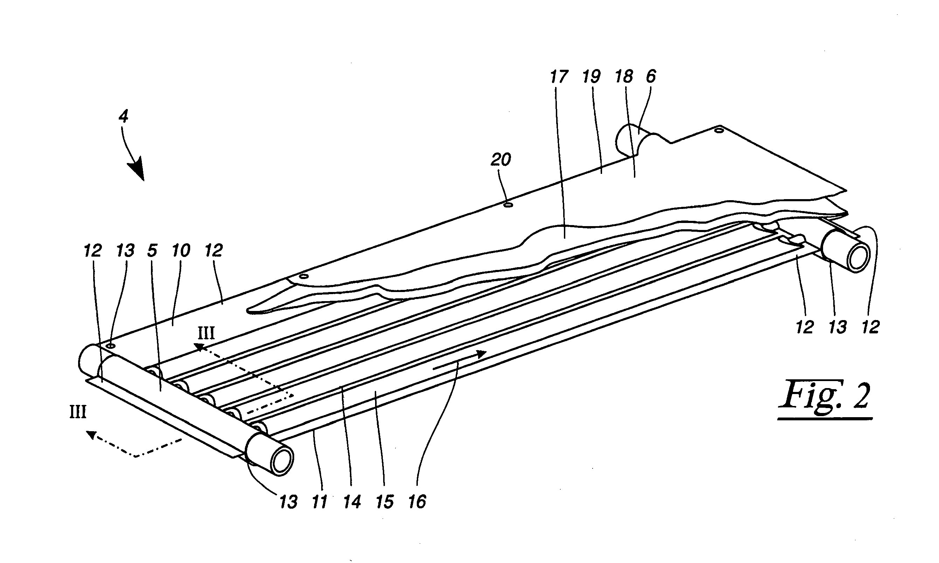

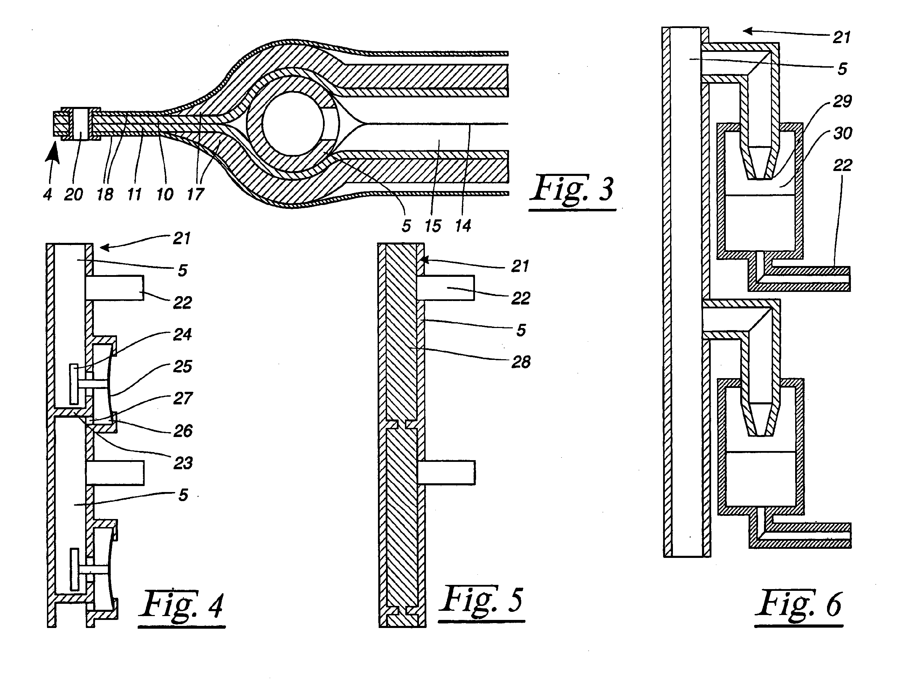

Die Figuren 2 und 3 zeigen eine räumliche Ansicht der Folientasche 4 mit im Verhältnis zur Figur 1 verkürzter Längserstreckung. Die Folientasche 4 besteht aus einer oberen Folie 10 und einer unteren Folie 11. Beide Folien 10, 11 sind transparent, so daß Sonnenlicht durch die gesamte Folientasche 4 ungehindert durchdringen kann.

Die Folientasche 4 ist randseitig mit Randschweißnähten 12 versehen, die die Folientasche 4 bis auf Öffnungen 13 für die Zuleitung 5 und die Ableitung 6 allseitig verschließen. Um die Folientaschen 4 einfach kaskadieren zu können, besitzt die Folientasche 4 zwei Öffnungen 13 für die Zuleitung 5 und zwei Öffnungen 13 für die Ableitung 6.

Die Folientasche 4 besitzt außerdem Trennschweißnähte 14, die die Folientasche 4 in einzelne Kammern 15 trennt. Diese Kammern 15 sind flächig über nahezu die gesamte Folientasche 4 verteilt und werden über die Zuleitung 5 mit einem nicht dargestellten Wärmetransportmedium beschickt, welches über die Ableitung 6 abfließen kann. Damit kann das Wärmetransportmedium geführt durch die Trennschweißnähte 14, im wesentlichen nur in Strömungsrichtung 16 die Kammern 15 durchfließen.

In der Zu- 5 und Ableitung 6 können von Kammer 15 zu Kammer 15 nicht dargestellte Druckminderer angebracht sein. Daneben ist es auch vorstellbar, nur zwischen einer gewissen Anzahl von Kammern 15 jeweils einen Druckminderer vorzusehen. Es ist auch daran gedacht, nur zwischen mindestens zwei Folientaschen 4 im Bereich der Zu- 5 und Ableitung 6 jeweils einen Druckminderer anzuordnen. Im Bereich der Ableitung 6 kann anstatt eines Druckminderers auch eine einfache Fluiddiode eingesetzt werden.

Zur Reduktion der Wärmeleitungsverluste mit der umgebenden Luft ist die Folientasche 4 allseitig von einem Wärmeisolator 17 umgeben. Dieser Wärmeisolator 17 ist zumindest oberseitig transparent, um eine Reflexion der einfallenden elektromagnetischen Strahlung möglichst klein zu halten. An der Unterseite der Folientasche 4 kann ein beliebiger Wärmeisolator 17 eingesetzt werden.

Um zu verhindern, daß der Wärmeisolator 17 durchnäßt und damit seine Isolationsfähigkeit eingeschränkt wird, ist die gesamte Anordnung in eine Schutzfolie 18 eingehüllt, welche randseitig wiederum mit Schweißnähten 19 abgedichtet ist. In diesen Schweißnähten 19 sind Ösen 20 verteilt, die eine einfache Befestigung der Folientasche 4 am Dach 2 des Hauses 1 durch Verzurren erlauben. Alternativ oder zusätzlich kann die Folientasche 4 auch mit dem Dach 2 verklebt werden. An wenigstens einer Längsseite ist die Folientasche 4 bis zur Schweißnaht 19 überlappend herausgezogen und mit fluchtenden Ösen 20 versehen. Auf diese Weise wird die Folientasche 4 innerhalb der Schutzfolie 18 in Lage gehalten. Vorzugsweise befindet sich der herausgezogene Rand an der höher gelegenen Längskante. Figur 4 zeigt eine schematische Darstellung einer ersten Ausführungsform eines Druckminderers 21. Die Zuleitung 5 steht mit einer Zweigleitung 22 in Verbindung, welche direkt in eine Kammer 15 geführt ist. Die Zuleitung 5 ist endseitig durch eine Platte 23 geschlossen, um zu verhindern, daß sich schwerkraftbedingt von Kammer 15 zu Kammer 15 ein zunehmender Druck aufbaut.

In der Zuleitung 5 ist ein Ventil 24 angeordnet, welches an einer Membrane 25 sitzt. Die Membrane 25 ist außenseitig mit Luftdruck der Umgebungsluft belastet und bildet auf diese Weise einen Drucksensor. Linksseitig wird die Membrane 25 vom Wärmetransportmedium beaufschlagt, so daß das Ventil 24 dann schließt, wenn der Druck des Wärmetransportmediums in einer Membrankammer 26 einen bestimmten Wert überschreitet. Damit stellt sich in der Membrankammer 26 ein definierter Flüssigkeitsdruck ein. Die Membrankammer 26 steht über eine Öffnung 27 mit der Zuleitung 5 des folgenden Druckminderers 21 in Verbindung.

Die Figur 5 zeigt eine alternative Ausführungsform eines Druckminderers 21. Bei dieser Ausführungsform wird eine Zuleitung 5 mit vergrößertem Querschnitt eingesetzt. Innerhalb der Druckleitung 5 ist ein Schaum oder Fasermaterial 28, welches kapillare Wirkungen besitzt. Durch diese kapillare Wirkung ist es ausgeschlossen, daß sich über die Zuleitung 5 hinweg schwerkraftbedingte Drücke aufbauen.

Schließlich zeigt die Figur 6 eine weitere alternative Ausführungsform eines Druckminderers 21. Die Zuleitung 5 besitzt in diesem Fall eine Querschnittsverengung 29 an ihrem freien Ende. Durch diese Querschnittsverengung 29 ergibt sich ein Tropfsystem, durch das eine Tropfkammer 30 mit dem Wärmetransportmedium gefüllt wird. Aufgrund der Fallstrecke, die durch das Tropfsystem bedingt ist, sind die einzelnen Zweigleitungen 22 nicht mehr durch das Wärmetransportmedium kommunizierend verbunden.

Da einige Ausführungsbeispiele der vorliegenden Erfindung nicht gezeigt bzw. beschrieben sind, ist zu verstehen, daß eine Vielzahl von Änderungen und Abwandlungen dieser beschriebenen Ausführungsbeispiele möglich ist, ohne den wesentlichen Gedanken und den Schutzbereich der Erfindung zu verlassen, der durch die Ansprüche festgelegt ist.

**Bezugszeichenliste**

| | | | |
|---|---|---|---|
| 1 | Haus | 30 | Tropfkammer |
| 2 | Dach | 31 | Ventil |
| 3 | Vorrichtung | 32 | Temperatursensor |
| 4 | Folientasche | 33 | Schneesensor |
| 5 | Zuleitung | 34 | Regler |
| 6 | Ableitung | | |
| 7 | Umwälzpumpe | | |
| 8 | Vorratsgefäß | | |
| 9 | Wärmetauscher | | |
| 10 | Obere Folie | | |
| 11 | Untere Folie | | |
| 12 | Randschweißnaht | | |
| 13 | Öffnung | | |
| 14 | Trennschweißnaht | | |
| 15 | Kammer | | |
| 16 | Strömungsrichtung | | |
| 17 | Wärmeisolator | | |
| 18 | Schutzfolie | | |
| 19 | Schweißnaht | | |
| 20 | Öse | | |
| 21 | Druckminderer | | |
| 22 | Zweigleitung | | |
| 23 | Platte | | |
| 24 | Ventil | | |
| 25 | Membrane | | |
| 26 | Membrankammer | | |
| 27 | Öffnung | | |
| 28 | Schaum oder Faserteil | | |
| 29 | Querschnittsverengung | | |

## Patentansprüche

1. Vorrichtung zum Absorbieren von elektromagnetischer Strahlung, insbesondere Sonnenstrahlung, wobei die Vorrichtung (3) mindestens eine biegsame Folientasche (4) aufweist, die in Kammern (15) geteilt ist, welche mit mindestens einer Zuleitung (5) zum Einbringen eines Wärmetransportmediums und mindestens einer Ableitung (6) zum Austritt des Wärmetransportmediums verbunden sind, **dadurch gekennzeichnet, daß** die Vorrichtung (3) zwischen mindestens zwei der Kammern (15) und/oder Folientaschen (4) zuleitungsseitig mindestens einen Druckminderer (21) aufweist, der den Druck des Wärmetransportmediums begrenzt.

2. Vorrichtung nach Anspruch 1, **dadurch gekennzeichnet, daß** zwischen mindestens zwei der Kammern (15) und/oder Folientaschen (4) ablaufseitig mindestens eine Fluiddiode und/oder mindestens ein Druckminderer (21) vorgesehen ist.

3. Vorrichtung nach Anspruch 1 oder 2, **dadurch gekennzeichnet, daß** der Druckminderer (21) von einem Leitungsstück gebildet ist, in welches ein Schaum und/oder Fasermaterial (28) eingebracht ist.

4. Vorrichtung nach Anspruch 1 oder 2, **dadurch gekennzeichnet, daß** der Druckminderer (21) von einer Tropfkammer (30) gebildet ist.

5. Vorrichtung nach Anspruch 1 oder 2, **dadurch gekennzeichnet, daß** der Druckminderer (21) von einem Leitungsstück mit quer zur Fließrichtung verlaufenden Schwellen gebildet ist.

6. Vorrichtung nach Anspruch 1 oder 2, **dadurch gekennzeichnet, daß** der Druckminderer (21) von einem Mäander gebildet ist.

7. Vorrichtung nach mindestens einem der Ansprüche 1 bis 6, **dadurch gekennzeichnet, daß** die Folientasche (4) zumindest unterseitig mit mindestens einem Wärmeisolator (17) belegt ist.

8. Vorrichtung nach mindestens einem der Ansprüche 1 bis 7, **dadurch gekennzeichnet, daß** die Folientasche (4) zumindest oberseitig mit mindestens einem transparenten Wärmeisolator (17) belegt ist.

9. Vorrichtung nach Anspruch 7 oder 8, **dadurch gekennzeichnet, daß** der Wärmeisolator (17) von einer Schutzfolie (9) umgeben ist.

10. Vorrichtung nach Anspruch 9, **dadurch gekennzeichnet, daß** die Schutzfolie (18) gasgefüllt ist.

11. Vorrichtung nach mindestens einem der Ansprüche 1 bis 10, **dadurch gekennzeichnet, daß** die Folientasche (4) durch Trennschweißnähte (14) in Kammern (15) und/oder Leitungsstücke geteilt ist.

12. Vorrichtung nach mindestens einem der Ansprüche 1 bis 11, **dadurch gekennzeichnet, daß** das Wärmetransportmedium Strahlung absorbierend ist.

13. Vorrichtung nach Anspruch 12, **dadurch gekennzeichnet, daß** das Wärmetransportmedium eine temperaturabhängige Strahlungsabsorption aufweist, wobei dessen Absorption mit zunehmender Temperatur abnimmt.

14. Vorrichtung nach mindestens einem der Ansprüche 1 bis 13, **dadurch gekennzeichnet, daß** die Folientasche (4) und/oder die Schutzfolie (18) UV-resistent und/oder verbißsicher ausgerüstet ist.

15. Vorrichtung nach mindestens einem der Ansprüche 1 bis 14, **dadurch gekennzeichnet, daß** die Folientasche (4) und/oder die Schutzfolie (18) mindestens eine Fotovoltaikzelle aus halbleitendem Material aufweist.

16. Vorrichtung nach mindestens einem der Ansprüche 1 bis 15, **dadurch gekennzeichnet, daß** in der Zu- (5) und/oder Ableitung (6) zur Beeinflussung des Durchflusses des Wärmetransportmediums mindestens ein Ventil und/oder mindestens eine Umwälzpumpe (7) vorgesehen ist, das/die vorzugsweise mit mindestens einem Sensor (32, 33) in Wirkverbindung steht.

17. Vorrichtung nach mindestens einem der Ansprüche 1 bis 16, **dadurch gekennzeichnet, daß** die Vorrichtung (3) auf einem Untergrund (2) festgeklebt ist.

## Claims

1. Device for absorbing electromagnetic radiation, in particular solar radiation, the device (3) having at least one flexible sheet pocket (4), which is divided into chambers (15), which are connected to at least one supply line (5) for introducing a heat transfer medium and at least one discharge line (6) for letting out the heat transfer medium, **characterized in that** the device (3) has on the inlet side between at least two of the chambers (15) and/or sheet pockets (4) at least one pressure reducer (21), which limits the pressure of the heat transfer medium.

2. Device according to Claim 1, **characterized in that** at least one fluid diode and/or at least one pressure reducer (21) is provided on the outlet side between at least two of the chambers (15) and/or sheet pockets (4).

3. Device according to Claim 1 or 2, **characterized in that** the pressure reducer (21) is formed by a section of pipe into which a foam and/or fibrous material (28) has been inserted.

4. Device according to Claim 1 or 2, **characterized in that** the pressure reducer (21) is formed by a drip chamber (30).

5. Device according to Claim 1 or 2, **characterized in that** the pressure reducer (21) is formed by a section of pipe with rungs running transversely in relation to the direction of flow.

6. Device according to Claim 1 or 2, **characterized in that** the pressure reducer (21) is formed by a meander.

7. Device according to at least one of Claims 1 to 6, **characterized in that** the sheet pocket (4) is covered with at least one heat insulator (17), at least on the underside.

8. Device according to at least one of Claims 1 to 7, **characterized in that** the sheet pocket (4) is covered with at least one transparent heat insulator (7), at least on the upper side.

9. Device according to Claim 7 or 8, **characterized in that** the heat insulator (17) is surrounded by a protective film (9).

10. Device according to Claim 9, **characterized in that** the protective film (18) is gas-filled.

11. Device according to at least one of Claims 1 to 10, **characterized in that** the sheet pocket (4) is divided into chambers (15) and/or sections of pipe by separating weld seams (14).

12. Device according to at least one of Claims 1 to 11, **characterized in that** the heat transfer medium is radiation-absorbent.

13. Device according to Claim 12, **characterized in that** the heat transfer medium has a temperature-dependent radiation absorption, the absorption of which decreases with increasing temperature.

14. Device according to at least one of Claims 1 to 13, **characterized in that** the sheet pocket (4) and/or the protective film (18) is made UV-resistant and/or gnaw-proof.

15. Device according to at least one of Claims 1 to 14, **characterized in that** the sheet pocket (4) and/or the protective film (18) has at least one photovoltaic cell of semiconducting material.

16. Device according to at least one of Claims 1 to 15, **characterized in that**, to influence the throughflow of the heat transfer medium, at least one valve and/or at least one circulating pump is provided in the supply line (5) and/or discharge line (6) and is preferably in operative connection with at least one sensor (32, 33).

17. Device according to at least one of Claims 1 to 16, **characterized in that** the device (3) is adhesively fixed on a base (2).

## Revendications

1. Dispositif pour absorber un rayonnement électromagnétique, en particulier un rayonnement solaire, le dispositif (3) présentant au moins une pochette flexible (4) divisée en chambres (15) qui sont connectées à au moins une conduite d'amenée (5) pour l'introduction d'un milieu caloporteur et à au moins une conduite d'évacuation (6) pour la sortie du milieu caloporteur, **caractérisé en ce que** le dispositif (3) présente au moins un réducteur de pression (21) du côté de la conduite d'amenée entre au moins deux des chambres (15) et/ou des pochettes (4), lequel réducteur de pression limite la pression du milieu caloporteur.

2. Dispositif selon la revendication 1, **caractérisé en ce qu'**au moins une diode fluide et/ou au moins un réducteur de pression (21) sont prévus du côté de la sortie entre au moins deux des chambres (15) et/ou des pochettes (4).

3. Dispositif selon la revendication 1 ou 2, **caractérisé en ce que** le réducteur de pression (21) est formé par un segment de conduite dans lequel on introduit une mousse et/ou un matériau fibreux (28).

4. Dispositif selon la revendication 1 ou 2, **caractérisé en ce que** le réducteur de pression (21) est formé par une chambre à écoulement goutte-à-goutte (30).

5. Dispositif selon la revendication 1 ou 2, **caractérisé en ce que** le réducteur de pression (21) est formé par un segment de conduite avec des traverses s'étendant transversalement à la direction d'écoulement.

6. Dispositif selon la revendication 1 ou 2, **caractérisé en ce que** le réducteur de pression (21) est formé par un méandre.

7. Dispositif selon au moins l'une quelconque des revendications 1 à 6, **caractérisé en ce que** la pochette (4) est garnie au moins du côté inférieur avec au moins un isolant thermique (17).

8. Dispositif selon au moins l'une quelconque des revendications 1 à 7, **caractérisé en ce que** la pochette (4) est garnie au moins du côté supérieur avec au moins un isolant thermique transparent (17).

9. Dispositif selon la revendication 7 ou 8, **caractérisé en ce que** l'isolant thermique (17) est entouré par une feuille de protection (9).

10. Dispositif selon la revendication 9, **caractérisé en ce que** la feuille de protection (18) est remplie de gaz.

11. Dispositif selon au moins l'une quelconque des revendications 1 à 10, **caractérisé en ce que** la pochette (4) est divisée par des cordons de soudure de séparation (14) en chambres (15) et/ou en segments de conduite.

12. Dispositif selon au moins l'une quelconque des revendications 1 à 11, **caractérisé en ce que** le milieu caloporteur absorbe les rayonnements.

13. Dispositif selon la revendication 12, **caractérisé en ce que** le milieu caloporteur présente une absorption des rayonnements dépendant de la température, son absorption diminuant avec l'augmentation de la température.

14. Dispositif selon au moins l'une quelconque des revendications 1 à 13, **caractérisé en ce que** la pochette (4) et/ou la feuille de protection (18) sont équipées de manière résistant aux UV et/ou résistant aux morsures.

15. Dispositif selon au moins l'une quelconque des revendications 1 à 14, **caractérisé en ce que** la pochette (4) et/ou la feuille de protection (18) présentent au moins une pile photovoltaïque en matériau semi-conducteur.

16. Dispositif selon au moins l'une quelconque des revendications 1 à 15, **caractérisé en ce que** dans la conduite d'amenée (5) et/ou la conduite de sortie (6) est prévue pour influencer le débit du milieu caloporteur au moins une soupape et/ou au moins une pompe de recirculation (7), qui est de préférence en liaison fonctionnelle avec au moins un capteur (32, 33).

17. Dispositif selon au moins l'une quelconque des revendications 1 à 16, **caractérisé en ce que** le dispositif (3) est collé fixement sur un subjectile (2).
